Europäisches Patentamt

European Patent Office

Office européen des brevets

(19)

(11) Veröffentlichungsnummer: **0 056 622**
**B1**

# (12) EUROPÄISCHE PATENTSCHRIFT

(45) Veröffentlichungstag der Patentschrift:
**16.07.86**

(21) Anmeldenummer: **82100233.4**

(22) Anmeldetag: **14.01.82**

(51) Int. Cl.⁴: **C 08 L 31/04,** C 09 D 3/74,
C 09 J 3/14, C 08 K 9/06,
C 08 J 3/12

(54) **Pulverförmige Polymerkomposition, Verfahren zu ihrer Herstellung und ihre Verwendung.**

(30) Priorität: **17.01.81 DE 3101413**

(43) Veröffentlichungstag der Anmeldung:
**28.07.82 Patentblatt 82/30**

(45) Bekanntmachung des Hinweises auf die Patenterteilung:
**16.07.86 Patentblatt 86/29**

(84) Benannte Vertragsstaaten:
**AT BE CH DE FR GB IT LI NL SE**

(56) Entgegenhaltungen:
**DE - A - 2 240 027**
**DE - A - 2 344 388**

(73) Patentinhaber: **HOECHST AKTIENGESELLSCHAFT,
Postfach 80 03 20, D-6230 Frankfurt am Main 80 (DE)**

(72) Erfinder: **Harréus, Albrecht, Dr.,
Philip-Kremer-Strasse 16, D-6233 Kelkheim (Taunus)
(DE)**
Erfinder: **Kaiser, Eduard, Dr.,
Johann-Strauss-Strasse 20, D-6233 Kelkheim (Taunus)
(DE)**
Erfinder: **Seip, Detlev, Dr., An den Römergärten 5,
D-6233 Kelkheim (Taunus) (DE)**
Erfinder: **Zimmermann, Wolfgang, Dr., Im Stückes 48,
D-6233 Kelkheim (Taunus) (DE)**

ACTORUM AG

**Beschreibung**

Die Erfindung bezieht sich auf eine pulverförmige Polymerkomposition auf Basis eines in Wasser dispergierbaren Vinylesterpolymers, Verfahren zu ihrer Herstellung durch Sprühtrocknung einer wässrigen Vinylesterpolymer-Dispersion in Gegenwart von Kieselsäure und ihre Verwendung.

Es ist bekannt, dass hochdisperse Kieselsäure zur Verbesserung der Rieselfähigkeit von pulverförmigen Produkten, z.B. Salzen und Wachsen, gut geeignet ist; dabei kann die als Fliessmittel verwendete Kieselsäure hydrophil oder hydrophob sein (vgl. Seifen-Öle-Fette-Wachse 94 (1968), Seiten 849–858).

Es ist ferner bekannt, dass durch Zerstäubung wässriger Dispersionen von Vinylacetat/Ethylen-Copolymeren in Anwesenheit von Kieselsäure als Antibackmittel in einem Sprühturm Dispersionspulver hergestellt werden, die rieselfähig und gut redispergierbar sind; dabei wird eine Kieselsäure mit einer mittleren Teilchengrösse von 0,01 bis 0,5 µm in einer Menge von 4 bis 20 Gewichtsprozent (bezogen auf den Feststoffgehalt der Dispersion) gleichzeitig mit der Dispersion, aber räumlich davon getrennt, in den Sprühturm dosiert (vgl. deutsche Patentschrift 2 214 410 = US-Patentschrift 3 883 489). Ein ähnliches Verfahren mit Dispersionen von Copolymeren aus Vinylacetat und diversen Comonomeren als Ausgangsmaterial für die Sprühtrocknung ist ebenfalls beschrieben, wobei Kieselsäure als Antibackmittel in einer Menge von 2 bis 20 Gewichtsprozent (bezogen auf den Feststoffgehalt der Dispersion) verwendet wird (vgl. deutsche Auslegeschrift 2 614 261 = britische Patentschrift 1 569 637). Diese bekannten Dispersionspulver haben den Nachteil, dass sie aufgrund des relativ hohen Gehalts an Antibackmittel zum Stauben neigen; ferner ergeben sie nach Redispergieren in Wasser und Trocknen der Dispersion Filme, die nicht transparent sind.

Ferner ist bekannt, blockfeste und dispergierbare Polymerpulver durch Verdüsen von Dispersionen von Homo- oder Copolymerisaten mit niederer Einfriertemperatur herzustellen, wobei den Pulvern nach dem Trocknen inerte Stoffe in solcher Menge zugemischt werden, dass das Endprodukt 5 bis 20 Prozent davon enthält; als inerte Stoffe eignen sich Aluminiumsilikat, Kieselgur, kolloidales Silikagel, Tone, Leichtspat, feine Silikate, Talkum, Zemente und Diatomeenerde (vgl. deutsche Offenlegungsschrift 1 719 317 = britische Patentschrift 1 206 501). Es wird betont, dass bei kleinen Mengen des inerten Stoffes dessen Oberfläche völlig umhüllt wird, so dass eine wirksame Verminderung der Neigung zur Blockbildung nicht gegeben ist.

Aufgabe der Erfindung ist nun die Schaffung eines Polymerpulvers mit guter Rieselfähigkeit, geringer Staubneigung und guter Lagerstabilität, das in Wasser dispergierbar ist und transparente Filme ergibt. Die Transparenz der Filme ist insbesondere dann von Bedeutung, wenn das Polymer als Tapetenkleber eingesetzt werden soll.

Die Erfindung betrifft eine pulverförmige Polymerkomposition, die aus 98,0 bis 99,9 Gewichtsprozent eines in Wasser dispergierbaren Vinylesterpolymers und 2,0 bis 0,1 Gewichtsprozent einer hydrophoben Kieselsäure besteht.

Vorzugsweise besteht die erfindungsgemässe Polymerkomposition aus 99,0 bis 99,9 Gewichtsprozent eines in Wasser dispergierbaren Vinylesterpolymers und 1,0 bis 0,1 Gewichtsprozent einer hydrophoben Kieselsäure.

Die Erfindung betrifft ferner ein Verfahren zur Herstellung einer pulverförmigen kieselsäurehaltigen Polymerkomposition auf der Basis eines in Wasser dispergierbaren Vinylesterpolymers durch Sprühtrocknung einer wässrigen Vinylesterpolymer-Dispersion mit einem Feststoffgehalt von 30 bis 60 Gewichtsprozent in Gegenwart von Kieselsäure und ist dadurch gekennzeichnet, dass eine hydrophobe Kieselsäure in einer Menge von 0,1 bis 2,0 Gewichtsprozent (bezogen auf die Gesamtmenge aus Vinylesterpolymer und Kieselsäure) eingesetzt wird.

Das erfindungsgemäss verwendete in Wasser dispergierbare Vinylesterpolymer ist vorzugsweise ein Homopolymer eines Vinylesters mit 4, 5 oder 6 Kohlenstoffatomen, insbesondere Polyvinylacetat. Geeignet sind aber auch Vinylester-Copolymere, die sich aus zwei oder drei verschiedenen Monomeren zusammensetzen, insbesondere Copolymere aus Vinylacetat und mindestens einem Vinylester einer linearen oder verzweigten Carbonsäure mit 3 bis 18 Kohlenstoffatomen, vorzugsweise 3 bis 12 Kohlenstoffatomen, sowie Vinylchlorid und/oder Ethylen.

Für das erfindungsgemässe Herstellungsverfahren wird als Ausgangsmaterial eine wässrige Vinylesterpolymer-Dispersion eingesetzt, deren Feststoffgehalt 30 bis 60 Gewichtsprozent, vorzugsweise 40 bis 55 Gewichtsprozent, beträgt. Die Herstellung solcher Dispersionen ist bekannt, beispielsweise aus den oben genannten Druckschriften.

Wesentlicher Bestandteil der erfindungsgemässen Polymerkomposition ist eine hydrophobe Kieselsäure, die vorzugsweise ein Reaktionsprodukt einer hydrophilen Kieselsäure mit einem Organochlorsilan ist. Der Partikeldurchmesser der Kieselsäure beträgt vorzugsweise 10 bis 50 nm, die Oberfläche 50 bis 300 m²/g (gemessen nach BET) und der Kohlenstoffgehalt 0,2 bis 5, vorzugsweise 0,5 bis 4 Gewichtsprozent. Die 4gewichtsprozentige wässrige Suspension der Kieselsäure zeigt vorzugsweise einen pH-Wert von 3,5 bis 8.

Die hydrophobe Kieselsäure wird in bekannter Weise hergestellt (vgl. z.B. deutsche Patentschrift 2 129 522 = US-Patentschrift 3 658 749 und deutsche Patentschrift 1 172 245 = britische Patentschrift 1 005 473).

Beispielsweise wird hydrophiles Siliciumdioxid mit einem Organohalogensilan, vorzugsweise Organochlorsilan, behandelt, das in einer Menge von 0,5 bis 50 Gewichtsprozent, vorzugsweise 10 bis 20 Gewichtsprozent (bezogen auf Siliciumdioxid) eingesetzt wird. Diese Behandlung besteht vorzugsweise darin, dass zu einer in Suspension befindlichen Fällungskieselsäure bei einer Temperatur von 50 bis 90 °C ein Organohalogensilan zugegeben wird und das Produkt nach Vervollständigung der Reaktion filtriert, gewaschen, getrocknet und anschliessend auf eine Temperatur von 300 bis 400 °C erhitzt wird. Geeignete Organohalogensilane sind insbesondere Dialkyldihalogensilane, Diarhyldihalogensilane oder Alkylaryldihalogensilane mit vorzugsweise jeweils 1 oder 2 Kohlenstoffatomen in den Alkylgruppen und vorzugsweise jeweils 6 Kohlenstoffatomen in den Arylresten, z.B. Dimethyldichlorsilan, Dimethyldibromsilan, Diethyldichlorsilan, Diphenyldichlorsilan und Phenylmethyldichlorsilan.

Nach einem anderen Verfahren wird Siliciumdioxid durch Behandeln mit flüssigem hydrophobem Polyorganosiloxan hydrophob gemacht. Dabei werden durch Fällung erhaltene Siliciumdioxidpartikel mit einem Polyorganosiloxan besprüht, und die besprühten Partikel werden anschliessend 30 Minuten bis 3 Stunden lang auf eine Temperatur von mindestens 150 °C erhitzt. Das Polyorganosiloxan wird in einer Menge von 0,5 bis 50 Gewichtsprozent, vorzugsweise 0,5 bis 20 Gewichtsprozent, eingesetzt (bezogen auf das Endprodukt). Geeignete Polyorganosiloxane sind Alkylsiloxane, alicyclische Siloxane, Aralkylsiloxane und Aralkylpolysiloxane mit jeweils einer kinematischen Viskosität von 0,1 bis 30 m²/s (gemessen bei einer Temperatur von 25 °C).

Nach einem weiteren Verfahren wird Siliciumdioxid dadurch hydrophobiert, dass es in einer Konzentration von 2 bis 10 Gewichtsprozent in einem linear-polymeren Dimethylsiloxan (Silikonöl) dispergiert und die erhaltene Dispersion dann maximal 1 Stunde lang auf eine Temperatur von 250 bis 300 °C erhitzt wird. Das auf Raumtemperatur abgekühlte Gemisch wird danach mit einem Lösungsmittel wie Hexan verdünnt, und das durch Zentrifugieren isolierte hydrophobe Siliciumdioxid wird abschliessend getrocknet.

Die erfindungsgemässe Polymerkomposition enthält gegebenenfalls noch ein übliches Schutzkolloid, das bei der Herstellung der Ausgangsdispersion eingesetzt wurde. Besonders geeignet ist Polyvinylalkohol, vorzugsweise ein Polyvinylalkohol mit einer Esterzahl von 90 bis 215 mg KOH/g, dessen 4gewichtsprozentige wässrige Lösung bei einer Temperatur von 20 °C eine Viskosität von 3 bis 40 mPa · s aufweist. Die Menge des Schutzkolloids kann bis zu 20 Gewichtsprozent betragen und liegt vorzugsweise im Bereich von 5 bis 15 Gewichtsprozent (bezogen auf das Vinylesterpolymer). Statt eines einzigen Schutzkolloids ist auch ein Gemisch verschiedener Schutzkolloide anwendbar.

Die erfindungsgemässe Polymerkomposition wird in üblicher Weise durch Sprühtrocknung einer wässrigen Vinylesterpolymer-Dispersion hergestellt. Die Sprühtrocknung erfolgt in einem Trocknungsturm mit Hilfe von Zerstäubungsscheiben oder Einstoffdüsen oder Zweistoffdüsen. Die Trocknung der Dispersion wird mit einem heissen Gas, z.B. Stickstoff oder Luft, durchgeführt, das in den Turm geblasen wird. Die Temperatur des Trocknungsgases beträgt 90 bis 180 °C, vorzugsweise 110 bis 150 °C. Das Siliciumdioxid wird gleichzeitig mit der Dispersion, aber räumlich davon getrennt, in den Trocknungsturm eingegeben. Die Zugabe erfolgt normalerweise über Zweistoffdüsen, die sich in der Nähe der Turmdecke befinden, oder vorzugsweise im Gemisch mit dem Trocknungsgas. Die letztere Variante gewährleistet eine besonders gleichmässige Verteilung des Siliciumdioxids.

Die erfindungsgemässe Polymerkomposition ist pulverförmig, gut rieselfähig, lagerstabil und kaum staubend. Die Rieselfähigkeit der Polymerkomposition wird dadurch geprüft, dass man sie aus einem sanduhrähnlichen Messgefäss mit definierter kreisförmiger Auslauföffnung auslaufen lässt und die Auslauföffnung mit dem kleinsten Durchmesser ermittelt, die von der Probe einwandfrei passiert wird. Dabei ist die Rieselfähigkeit umso geringer, je grösser die Auslauföffnung ist. Die Staubneigung der Polymerkomposition wird durch Ermittlung der Staubzahl geprüft. Dazu lässt man eine 30-g-Probe der Polymerkomposition durch ein zylindrisches Rohr mit einer Länge von 80 cm und einem inneren Durchmesser von 5 cm in einem schwarzen, würfelförmigen Kasten mit einer Kantenlänge von 20 cm fallen; der Kasten wird von einer 12-Volt-Lampe durchstrahlt. Das durch den Kasten fallende Pulver bewirkt eine Trübung des Lichtstrahls, die mit zunehmender Staubneigung des Pulvers ansteigt. Aus dem Trübungswert ergibt sich die Staubzahl; ein wenig staubendes Produkt zeigt eine Staubzahl von weniger als 40, vorzugsweise von 5 bis 35, während ein staubendes Produkt eine Staubzahl von mehr als 50 erbringt.

Das Schüttgewicht der erfindungsgemässen Polymerkomposition liegt im Bereich von 400 bis 800 g/l, vorzugsweise 500 bis 700 g/l. Es wird nach DIN 53468 ermittelt. Das Stampfvolumen und das Stampfgewicht der Polymerkomposition werden in Anlehnung an DIN 53194 nach 250 Stampfungen festgestellt. Das Stampfvolumen beträgt 75 bis 98 Prozent, vorzugsweise 85 bis 94 Prozent, während das Stampfgewicht 500 bis 900 g/l, vorzugsweise 550 bis 800 g/l ausmacht.

Die erfindungsgemässe Polymerkomposition lässt sich mit Wasser innerhalb weniger Minuten zu sämigen, viskositäts- und lagerstabilen Dispersionen anrühren. Aus solchen Dispersionen hergestellte Filme zeichnen sich durch hohe Transparenz aus. Die Polymerkomposition eignet sich für die Herstellung von Anstrichmitteln, Leimen und Klebstoffen, insbesondere Tapetenklebern.

Die Erfindung wird durch die folgenden Beispiele näher erläutert. Prozentangaben beziehen sich jeweils auf das Gewicht.

Beispiel 1

In einem üblichen Zerstäubungsturm, dessen zylindrischer Teil eine Höhe von 1 m und einen Durchmesser von 2,2 m und dessen konischer Teil einen Winkel von 60 Grad aufweist, wird eine wässrige Polyvinylacetat-Dispersion sprühgetrocknet, die einen Feststoffgehalt von 45 Prozent und eine Viskosität von 0,8 Pa · s (Epprecht-Rheometer B/II) aufweist. Die Dispersion enthält 8 Prozent (bezogen auf Polyvinylacetat) eines Polyvinylalkohols, dessen Esterzahl 140 mg KOH/g beträgt und dessen 4-prozentige wässrige Lösung bei 20 °C eine Viskosität von 18 mPa · s zeigt, sowie 4 Prozent (bezogen auf Polyvinylacetat) eines Polyvinylalkohols, dessen Esterzahl 140 mg KOH/g beträgt und dessen 4-prozentige wässrige Lösung bei 20 °C eine Viskosität von 8 mPa · s zeigt. Die Dispersion wird dem Turm am Kopf zugeführt und mit Hilfe einer Zerstäubungsscheibe, deren Durchmesser 12 cm beträgt, die 4 Öffnungen mit einem Durchmesser von jeweils 2,5 mm aufweist und die sich mit einer Drehzahl von 20 000 min⁻¹ dreht, versprüht. Durch eine weitere Öffnung in der Turmdecke wird ein Gemisch aus Stickstoff und hydrophobem Siliciumdioxid in den Turm geblasen, und zwar mit einem Stickstoff-Durchsatz von 1200 kg/h. Der Stickstoff wird über einen Zyklonabscheider entfernt. Die Temperatur des Stickstoffs beträgt am Turmeingang 135 °C und am Abscheider 78 °C. Das Siliciumdioxid hat einen durchschnittlichen Partikeldurchmesser von 28 nm, eine Oberfläche von 110 m²/g und einen Kohlenstoffgehalt von 2 Prozent; der pH-Wert der 4-prozentigen wässrigen Suspension des Siliciumdioxids beträgt 7. Das Siliciumdioxid wird in eine Menge von 0,5 Prozent eingesetzt (bezogen auf den Feststoffgehalt der Polyvinylacetat-Dispersion).

Die Sprühtrocknung verläuft völlig störungsfrei über mehr als 2 Tage. Es wird mit einer Ausbeute von 11 kg/h ein bei einer Auslauföffnung des Messgefässes von 2,5 mm Durchmesser einwandfrei rieselfähiges, wenig staubendes und lagerstabiles Pulver erhalten, das eine Staubzahl von 33, ein Schüttgewicht von 550 g/l, ein Stampfvolumen von 86 Prozent und ein Stampfgewicht von 670 g/l aufweist.

Das kieselsäurehaltige Polyvinylacetat-Pulver wird mit Wasser zu einer 50-prozentigen Dispersion angerührt, deren Viskosität 5,0 Pa · s beträgt (Epprecht-Rheometer C/II). Nach Auftragen dieser Dispersion in einer Stärke von 300 µm auf eine schwarze Polyvinylchlorid-Folie und Trocknen wird ein transparenter Film erhalten.

Beispiel 2

Beispiel 1 wird wiederholt mit einer Polyvinylacetat-Dispersion, die einen Feststoffgehalt von 43 Prozent und eine Viskosität von 0,25 Pa · s aufweist. Diese Dispersion enthält 6,5 Prozent eines Polyvinylalkohols, dessen Esterzahl 90 mg KOH/g beträgt und dessen 4-prozentige wässrige Lösung bei 20 °C eine Viskosität von 30 mPa · s zeigt.

Nach der Sprühtrocknung erhält man ein bei einer Auslauföffnung des Messgefässes von 2,5 mm Durchmesser einwandfrei rieselfähiges, wenig staubendes Pulver mit einer Staubzahl von 25, einem Schüttgewicht von 650 g/l, einem Stampfvolumen von 90 Prozent und einem Stampf-gewicht von 740 g/l. Der aus dem redispergierten Pulver erhaltene Film ist transparent.

Beispiel 3

Beispiel 1 wird wiederholt unter Einsatz eines hydrophoben Siliciumdioxids mit einem durchschnittlichen Partikeldurchmesser von 16 nm, einer Oberfläche von 110 m²/g und einem Kohlenstoffgehalt von 1 Prozent; der pH-Wert der 4-prozentigen Suspension des Siliciumdioxids beträgt 4.

Nach der Sprühtrocknung erhält man ein bei einer Auslauföffnung des Messgefässes von 5 mm Durchmesser einwandfrei rieselfähiges, wenig staubendes Pulver mit einer Staubzahl von 29, einem Schüttgewicht von 580 g/l, einem Stampfvolumen von 92 Prozent und einem Stampfgewicht von 640 g/l. Der aus dem redispergierten Pulver erhaltene Film ist transparent.

Beispiel 4

Beispiel 1 wird wiederholt mit einer Dispersion eines Copolymers aus 80 Prozent Vinylacetat, 10 Prozent Ethylen und 10 Prozent Acrylamid, die keinen Polyvinylalkohol enthält; die Dispersion hat einen Feststoffgehalt von 45 Prozent und eine Viskosität von 0,6 Pa · s. Das Siliciumdioxid wird in einer Menge von 0,6 Prozent eingesetzt.

Nach der Sprühtrocknung erhält man ein bei einer Auslauföffnung des Messgefässes von 2,5 mm Durchmesser einwandfrei rieselfähiges, wenig staubendes Pulver mit einer Staubzahl von 33, einem Schüttgewicht von 502 g/l, einem Stampfvolumen von 87 Prozent und einem Stampfgewicht von 577 g/l. Der aus dem redispergierten Pulver erhaltene Film ist transparent.

Vergleichsbeispiel 1

Beispiel 1 wird wiederholt, jedoch ohne Einsatz von Siliciumdioxid.

Nach 6 Stunden muss die Sprühtrocknung wegen starker Anbackungen und Verstopfungen im Turm abgebrochen werden. Das erhaltene Pulver ist schlecht rieselfähig (kein Auslaufen bei einer Öffnung des Messgefässes von 20 mm Durchmesser), wenig staubend und hat eine Staubzahl von 28, ein Schüttgewicht von 620 g/l, ein Stampfvolumen von 88 Prozent und ein Stampfgewicht von 730 g/l. Das Pulver ist nicht einwandfrei redispergierbar.

Vergleichsbeispiel 2

Beispiel 1 wird wiederholt unter Einsatz eines hydrophilen Siliciumdioxids mit einem durchschnittlichen Partikeldurchmesser von 18 nm, einer Oberfläche von 190 m²/g und einem Kohlenstoffgehalt von 0 Prozent; der pH-Wert der 4-prozentigen Suspension des Siliciumdioxids beträgt 6,3. Das Siliciumdioxid wird in einer Menge von 1 Prozent eingesetzt.

Nach 10 Stunden muss die Sprühtrocknung wegen Anbackungen und Verstopfungen im Turm abgebrochen werden. Das erhaltene Pulver ist schlecht rieselfähig, da es erst bei einer Öffnung des Messgefässes von 18 mm Durchmesser ausläuft, und wenig staubend; es hat eine Staubzahl von 31, ein Schüttgewicht von 570 g/l, ein Stampf-volumen von 87 Prozent und ein Stampfgewicht von 670 g/l. Der aus dem redispergierten Pulver erhaltene Film ist transparent.

Vergleichsbeispiel 3

Vergleichsbeispiel 2 wird wiederholt, wobei das Siliciumdioxid in einer Menge von 5 Prozent eingesetzt wird. Nach der Sprühtrocknung erhält man ein bei einer Auslauföffnung des Messgefässes von 5 mm Durchmesser rieselfähiges, aber staubendes Pulver mit einer Staubzahl von 55, einem Schüttgewicht von 520 g/l, einem Stampfvolumen von 91 Prozent und einem Stampfgewicht von 590 g/l. Der aus dem redispergierten Pulver erhaltene Film ist trübe.

**Patentansprüche**

1. Pulverförmige Polymerkomposition, dadurch gekennzeichnet, dass sie aus einer wässrigen Vinylesterpolymer-Dispersion durch Sprühtrocknung unter Zugabe von hydrophober Kieselsäure hergestellt wurde und zu 98,0 bis 99,9 Gewichtsprozent aus einem Vinylesterpolymer sowie zu 2,0 bis 0,1 Gewichtsprozent aus hydrophober Kieselsäure besteht und mit Wasser zu einer viskositäts- und lagerstabilen Dispersion anrührbar ist.

2. Polymerkomposition nach Anspruch 1, dadurch gekennzeichnet, dass das Vinylesterpolymer ein Vinylacetat-Homopolymer ist.

3. Polymerkomposition nach Anspruch 1, dadurch gekennzeichnet, dass die hydrophobe Kieselsäure ein Reaktionsprodukt einer Kieselsäure mit einem Organochlorsilan ist.

4. Polymerkomposition nach Anspruch 1, dadurch gekennzeichnet, dass die hydrophobe Kieselsäure einen Partikeldurchmesser von 10 bis 50 nm aufweist.

5. Polymerkomposition nach Anspruch 1, dadurch gekennzeichnet, dass die hydrophobe Kieselsäure eine Oberfläche von 50 bis 300 m²/g aufweist (gemessen nach BET).

6. Polymerkomposition nach Anspruch 1, dadurch gekennzeichnet, dass die hydrophobe Kieselsäure einen Kohlenstoffgehalt von 0,2 bis 5 Gewichtsprozent aufweist.

7. Verfahren zur Herstellung einer pulverförmigen kieselsäurehaltigen und in Wasser dispergierbaren Polymerkomposition auf der Basis eines Vinylesterpolymers durch Sprühtrocknung einer wässrigen Vinylesterpolymer-Dispersion mit einem Feststoffgehalt von 30 bis 60 Gewichtsprozent in Gegenwart von Kieselsäure, dadurch gekennzeichnet, dass eine hydrophobe Kieselsäure in einer Menge von 0,1 bis 2,0 Gewichtsprozent (bezogen auf die Gesamtmenge aus Vinylesterpolymer und Kieselsäure) eingesetzt wird.

8. Verfahren nach Anspruch 7, dadurch gekennzeichnet, dass die Kieselsäure im Gemisch mit dem Trocknungsgas eingesetzt wird.

9. Verwendung der Polymerkomposition nach Anspruch 1 zur Herstellung eines Klebemittels, insbesondere für Tapeten.

**Claims**

1. Pulverulent polymer composition, characterized in that it was prepared from an aqueous vinyl ester polymer dispersion by spray drying with adding of hydrophobic silica, and is composed of from 98.0 to 99.9 per cent by weight of a vinyl ester polymer and of from 2.0 to 0.1 per cent by weight of hydrophobic silica, and can be stirred into water to form a viscosity- and storagestable dispersion.

2. Polymer composition according to claim 1, characterized in that the vinyl ester polymer is a vinyl acetate homopolymer.

3. Polymer composition according to claim 1, characterized in that the hydrophobic silica is a reaction-product of a silica with an organochlorosilane.

4. Polymer composition according to claim 1, characterized in that the hydrophobic silica has a particle diameter of from 10 to 50 nm.

5. Polymer composition according to claim 1, characterized in that the hydrophobic silica has a surface area of from 50 to 300 m²/g (measured by the BET method).

6. Polymer composition according to claim 1, characterized in that the hydrophobic silica has a carbon content of from 0.2 to 5 per cent by weight.

7. Process for the preparation of a pulverulent, silica-containing and water-dispersible polymer composition based on a vinyl ester polymer, by spray drying an aqueous vinyl ester polymer dispersion having a solids content of from 30 to 60 per cent by weight, in the presence of silica, characterized in that a hydrophobic silica is employed in a quantity of from 0.1 to 2.0 per cent by weight (relative to the total quantity of vinyl ester polymer and silica).

8. Process according to claim 7, characterized in that the silica is employed in admixture with a drying gas.

9. Use of the polymer composition according to claim 1 for the preparation of an adhesive, in particular wallpaper adhesive.

**Revendications**

1. Composition de polymère pulvérulente caractérisée en ce qu'elle a été préparée à partir d'une dispersion aqueuse d'un polymère d'ester vinylique par séchage avec pulvérisation en présence d'une silice hydrophobe, en ce qu'elle est constituée de 98,0 à 99,9% en poids d'un polymère d'ester vinylique et de 2,0 à 0,1% en poids d'une silice hydrophobe, et en ce qu'elle peut être diluée à l'eau pour donner une dispersion qui se conserve bien et dont la viscosité est stable.

2. Composition de polymère selon la revendication 1 caractérisée en ce que le polymère d'ester vinylique est un homopolymère de l'acétate de vinyle.

3. Composition de polymère selon la revendication 1 caractérisée en ce que la silice hydrophobe est un produit résultant de la réaction d'une silice avec un organo-chlorosilane.

4. Composition de polymère selon la revendication 1 caractérisée en ce que la silice hydrophobe a un diamètre de particules compris entre 10 et 50 nm.

5. Composition de polymère selon la revendication 1 caractérisée en ce que la silice hydrophobe a une surface, mesurée par la méthode BET, comprise entre 50 et 300 m²/g.

6. Composition de polymère selon la revendication 1 caractérisé en ce que la silice hydrophobe a une teneur en carbone de 0,2 à 5% en poids.

7. Procédé de préparation d'une composition de polymère pulvérulente, contenant de la silice et dispersable dans l'eau, à base d'un polymère d'ester vinylique, par séchage avec pulvérisation d'une dispersion aqueuse d'un polymère d'ester vinylique dont la teneur en matière solide est comprise entre 30 et 60% en poids, en présence de silice, procédé caractérisé en ce qu'on utilise une silice hydrophobe en une quantité de 0,1 à 2,0% en poids par rapport à la quantité totale du polymère d'ester vinylique et de la silice.

8. Procédé selon la revendication 7 caractérisé en ce que la silice est utilisée en mélange avec le gaz de séchage.

9. Application de la composition de polymère selon la revendication 1 pour la préparation d'une colle, plus spécialement d'une colle pour papiers peints.